(19) Europäisches Patentamt
European Patent Office
Office européen des brevets

(11) **EP 4 703 882 A1**

(12) **EUROPEAN PATENT APPLICATION**

(43) Date of publication:
**04.03.2026 Bulletin 2026/10**

(21) Application number: **25184602.8**

(22) Date of filing: **23.06.2025**

(51) International Patent Classification (IPC):
**G06F 9/50** (2006.01)        **G06Q 10/04** (2023.01)
**H04L 47/83** (2022.01)        **G06F 11/30** (2006.01)
**G06F 11/34** (2006.01)

(52) Cooperative Patent Classification (CPC):
**G06F 9/5027; G06F 9/5072; G06Q 10/04;
H04L 47/83;** G06F 11/3006; G06F 11/3442;
G06F 2209/5015; G06F 2209/5019; G06F 2209/508

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.09.2024 IN 202421066668**

(71) Applicant: **Tata Consultancy Services Limited
Mumbai, Maharashtra 400 021 (IN)**

(72) Inventors:
• **BHOOKYA, Uday Chandra**
  **Pune, Maharashtra 411006 (IN)**
• **JETHURI, Kunal**
  **Pune, Maharashtra 411006 (IN)**
• **NATU, Maitreya**
  **Pune, Maharashtra 411006 (IN)**
• **RAVURU, Sanjeeva Rayudu**
  **Pune, Maharashtra 411006 (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM TO OPTIMIZE CLOUD COST BY ANALYZING RESOURCE UTILIZATION**

(57)    The under-utilized resources are attributed to various reasons such as over-provisioning of resources, diminishing use of resource, application upgrades. The present disclosure identifies one or more under-utilized resources from a set of resources by (i) deriving most recent steady state in utilization of metrics specific to set of resources, (ii) deriving one or more temporal patterns by analyzing derived most recent steady state in utilization of metrics specific to set of resources, (iii) computing a representative maximum utilization of metrics specific to set of resources for each of derived one or more temporal patterns, (iv) deriving headroom based on computed representative maximum utilization, (v) forecasting future behavior of utilization, (vi) deriving time to saturation for metrics specific to set of resources, and (vii) identifying one or more under-utilized resources based on derived time to saturation. One or more recommendations for optimizing identified one or more under-utilized resources are generated.

RESOURCES MODULE 202 → UNDER-UTILIZED RESOURCES IDENTIFICATION MODULE 204 → CLOUD COST OPTIMIZATION RECOMMENDATION MODULE 206

FIG. 2

EP 4 703 882 A1

**Description**

CROSS-REFERENCE TO RELATED APPLICATIONS AND PRIORITY

The present application claims priority from Indian provisional application no. 202421066668, filed on September 03, 2024.

TECHNICAL FIELD

The disclosure herein generally relates to cloud spend optimization, and, more particularly, to a method and system to optimize cloud cost by analyzing resource utilization.

BACKGROUND

Cloud technologies are shaping the industries of today and future. More and more businesses are attracted to cloud due to its promise of security, affordability, and ease of use. In 2023, total expenditure on public cloud system amounted to a total of $563.6 billion in 2023. This number is expected to go up to $678.8 billion in 2024, a 20.4% growth. It is predicted that by 2027, more than 70% of enterprises will use industry cloud platforms to accelerate their business initiatives, up from less than 15% in 2023.

Many resources are often observed to be under-utilized. This behavior is attributed to various reasons such as over-provisioning of the resources, diminishing use of the resource, application upgrades, etc. Analysis of the utilization metrics of these resources can lead to many insights to optimize spend.

Today, various tools are offered to analyze cloud spend and help plan the cloud spend better. However, most of these solutions fall short on various aspects. Existing tools analyze resources in isolation and fail to capture their systemic impact. Consequently, they end up generating too many or too few anomalies and fail to offer a perspective on prioritization and budget planning. Another common limitation of existing solutions is that most of these tools stop at detecting spend leakages but fail to offer actionable recommendations.

SUMMARY

Embodiments of the present disclosure present technological improvements as solutions to one or more of the above-mentioned technical problems recognized by the inventors in conventional systems. For example, in one embodiment, a method to optimize cloud cost by analyzing resource utilization is provided. The method includes identifying, via one or more hardware processors, one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified: deriving a most recent steady state in utilization of one or more metrics specific to the one or more set of resources using an ensemble of change detection algorithms; deriving the one or more temporal patterns by analyzing the derived most recent steady state in the utilization of the one or more metrics specific to the one or more set of resources across one or more temporal dimensions to identify one or more recurring patterns of at least one of an over utilization and a under-utilization; computing a representative maximum utilization of the one or more metrics specific to the one or more set of resources for each of the derived one or more temporal patterns using one or more techniques comprising at least one of a 90th quantiles, a maximum after removing outliers and a mean + standard deviation; deriving a headroom based on the computed representative maximum utilization and a value associated with full utilization for the one or more temporal dimensions pertaining to each of the derived one or more temporal patterns; forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources; deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and identifying the one or more under-utilized resources based on the derived time to saturation; and deriving, via the one or more hardware processors, one or more recommendations for optimizing the identified one or more under-utilized resources using at least one of: deriving a first recommendation for a first status when the one or more metrics pertaining to the one or more set of resources comprised in a server indicate a first level headroom for a span of time in a recurring manner; deriving a second recommendation for a second status when the one or more metrics pertaining to the one or more set of resources comprised in the server indicates a second level headroom and no near-term saturation for a span of time in a recurring manner; and deriving a third recommendation for a third status, wherein multiple servers are packed within an existing server for consolidating the one or more set of resources, wherein consolidation of the one or more set of resources is performed using a greedy approach by: selecting a second set of resources from the identified one or more under-utilized resources, wherein each of the selected second set of resources comprises (i) a set of metrics measuring the utilization of each of the selected second set of resources, and (ii) contains a set of associated one or more temporal patterns; calculating a representative utilization for each of the set of metrics associated with each of the selected second set of resources; and iteratively perform: identifying a resource having the highest utilization across each of the set of metrics; finding one or more target servers having a headroom equal to a predefined headroom to accommodate the identified resource, wherein the one or more target servers are found by checking if the headroom available for each of the set of metrics on the one or more target servers exceeds the representative utilization; calculating one or more key metrics including an available space and a space skew for each of the one or more target servers; identifying a best suited server amongst the one or more target servers based on a score computed for each of the one or more target servers using the calculated one or more key metrics; and creating a new target server if none of the existing one or more target servers accommodate the identified resource.

In another aspect, there is provided a system to optimize cloud cost by analyzing resource utilization. The system comprises: a memory storing instructions; one or more communication interfaces; and one or more hardware processors coupled to the memory via the one or more communication interfaces, wherein the one or more hardware processors are configured by the instructions to: identify one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified: deriving a most recent steady state in utilization of one or more metrics specific to the one or more set of resources using an ensemble of change detection algorithms; deriving the one or more temporal patterns by analyzing the derived most recent steady state in the utilization of the one or more metrics specific to the one or more set of resources across one or more temporal dimensions to identify one or more recurring patterns of at least one of an over utilization and a under-utilization; computing a representative maximum utilization of the one or more metrics specific to the one or more set of resources for each of the derived one or more temporal patterns using one or more techniques comprising at least one of a 90th quantiles, a maximum after removing outliers and a mean + standard deviation; deriving a headroom based on the computed representative maximum utilization and a value associated with full utilization for the one or more temporal dimensions pertaining to each of the derived one or more temporal patterns; forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources; deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and identifying the one or more under-utilized resources based on the derived time to saturation. The system further includes deriving one or more recommendations for optimizing the identified one or more under-utilized resources using at least one of: deriving a first recommendation for a first status when the one or more metrics pertaining to the one or more set of resources comprised in a server indicate a first level headroom for a span of time in a recurring manner; deriving a second recommendation for a second status when the one or more metrics pertaining to the one or more set of resources comprised in the server indicates a second level headroom and no near-term saturation for a span of time in a recurring manner; and deriving a third recommendation for a third status, wherein multiple servers are packed within an existing server for consolidating the one or more set of resources, wherein consolidation of the one or more set of resources is performed using a greedy approach by: selecting a second set of resources from the identified one or more under-utilized resources, wherein each of the selected second set of resources comprises (i) a set of metrics measuring the utilization of each of the selected second set of resources, and (ii) contains a set of associated one or more temporal patterns; calculating a representative utilization for each of the set of metrics associated with each of the selected second set of resources; and iteratively perform: identifying a resource having the highest utilization across each of the set of metrics; finding one or more target servers having a headroom equal to a predefined headroom to accommodate the identified resource, wherein the one or more target servers are found by checking if the headroom available for each of the set of metrics on the one or more target servers exceeds the representative utilization; calculating one or more key metrics including an available space and a space skew for each of the one or more target servers; identifying a best suited server amongst the one or more target servers based on a score computed for each of the one or more target servers using the calculated one or more key metrics; and creating a new target server if none of the existing one or more target servers accommodate the identified resource;

In yet another aspect, there are provided one or more non-transitory machine-readable information storage mediums comprising one or more instructions which when executed by one or more hardware processors cause identifying one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified: deriving a most recent steady state in utilization of one or more metrics specific to the one or more set of resources using an ensemble of change detection algorithms; deriving the one or more temporal patterns by analyzing the derived most recent steady state in the utilization of the one or more metrics specific to the one or more set of resources across one or more temporal dimensions to identify one or more recurring patterns of at least one of an over utilization and a under-utilization; computing a representative maximum utilization of the one or more metrics specific to the one or more set of resources for each of the derived one or more temporal patterns using one or more techniques comprising at least one of a 90th quantiles, a maximum after removing outliers and a mean + standard deviation; deriving a headroom based on the computed representative maximum utilization and a value associated with full utilization for the one or more temporal dimensions pertaining to each of the derived one or more temporal patterns; forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources; deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and identifying the one or more under-utilized resources based on the derived time to saturation; and deriving one or more recommendations for optimizing the identified one or more under-utilized resources using at least one of: deriving a first recommendation for a first status when the one or more metrics pertaining to the one or more set of resources comprised in a server indicate a first level headroom for a span of time in a recurring manner; deriving a second recommendation for a second status when the one or more metrics pertaining to the one or more set of resources comprised in the server indicates a second level headroom and no near-term saturation for a span of time in a recurring manner; and deriving a third recommendation for a third status, wherein multiple servers are packed within an existing server for consolidating the one or more set of resources, wherein consolidation of the one or more set of resources is performed using a greedy approach by: selecting a second set of resources from the identified one or more under-utilized resources, wherein each of the selected second set of resources comprises (i) a set of metrics measuring the utilization of each of the selected second set of resources, and (ii) contains a set of associated one or more temporal patterns; calculating a representative utilization for each of the set of metrics associated with each of the selected second set of resources; and iteratively perform: identifying a resource having the highest utilization across each of the set of metrics; finding one or more target servers having a headroom equal to a predefined headroom to accommodate the identified resource, wherein the one or more target servers are found by checking if the headroom available for each of the set of metrics on the one or more target servers exceeds the representative utilization; calculating one or more key metrics including an available space and a space skew for each of the one or more target servers; identifying a best suited server amongst the one or more target servers based on a score computed for each of the one or more target servers using the calculated one or more key metrics; and creating a new target server if none of the existing one or more target servers accommodate the identified resource.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary title system to optimize cloud cost by analyzing resource utilization, according to some embodiments of the present disclosure.

FIG. 2 is a functional block diagram of the system to optimize cloud cost by analyzing resource utilization, according to some embodiments of the present disclosure.

FIGS. 3A through 3C are flow diagrams illustrating the steps involved in the method to optimize cloud cost by analyzing resource utilization, according to some embodiments of the present disclosure

FIGS. 4A and 4B show a Central Processing Unit (CPU) and a memory utilization of an underutilized Virtual Machine (VM), according to some embodiments of the present disclosure.

FIGS. 5A through 5D shows an example of resource consolidation, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The spend leakage in a cloud estate manifests in many forms and requires a careful analysis of various metrics. To overcome the challenges of the conventional approaches in solving the problem of cloud spend optimization, embodiments herein provide a method and system to optimize cloud cost by analyzing resource utilization. The present disclosure identifies one or more under-utilized resources from one or more set of resources by (i) deriving a most recent steady state in utilization of one or more metrics specific to the one or more set of resources, (ii) deriving one or more temporal patterns by analyzing the derived the most recent steady state in utilization of the one or more metrics specific to the one or more set of resources, (iii) computing a representative maximum utilization of the one or more metrics specific to the one or more set of resources for each of the derived one or more temporal patterns, (iv) deriving a headroom based on the computed representative maximum utilization, (v) forecasting a future behavior of the utilization, (vi) deriving a time to saturation pertaining to the one or more metrics specific to the one or more set of resources, and (vii) identifying the one or more under-utilized resources based on the derived deriving a time to saturation. Further the present disclosure derives one or more recommendations for optimizing the identified one or more under-utilized resources.

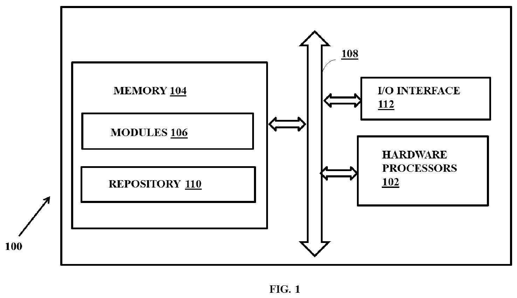

Referring now to the drawings, and more particularly to FIG. 1 through FIG. 5D, where similar reference characters denote corresponding features consistently throughout the figures, there are shown preferred embodiments, and these embodiments are described in the context of the following exemplary system and/or method.

FIG. 1 illustrates an exemplary system to optimize cloud cost by analyzing resource utilization, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

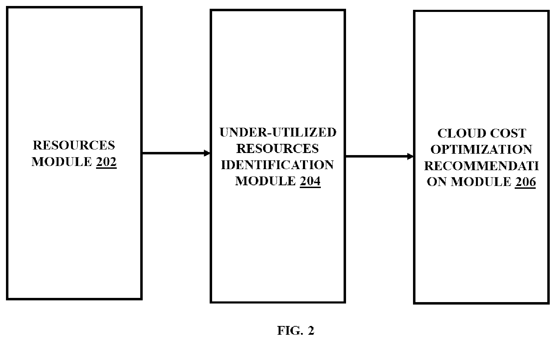

The plurality of modules 106 includes programs or coded instructions that supplement applications or functions performed by the system 100 to optimize cloud cost by analyzing resource utilization. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 to optimize cloud cost by analyzing cloud resource utilization. In an embodiment, the modules 106 include a resources module 202, an under-utilized resources identification module 204, and a cloud cost optimization recommendation module 206. The modules are depicted in FIG. 2. These modules that are depicted in FIG. 2 are implemented as at least one of a logically self-contained part of a software program, a self-contained hardware component, and/or, a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

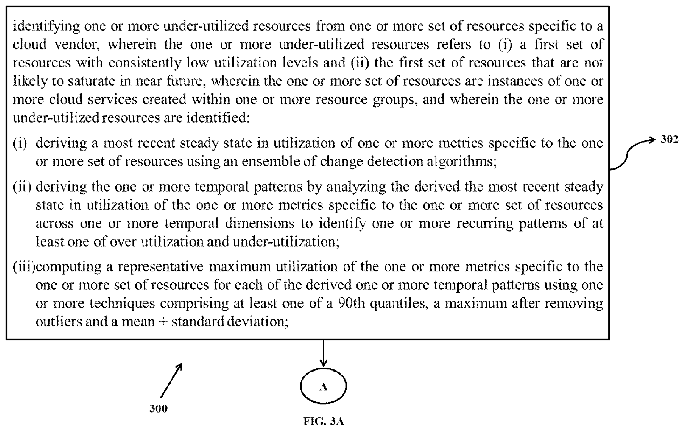

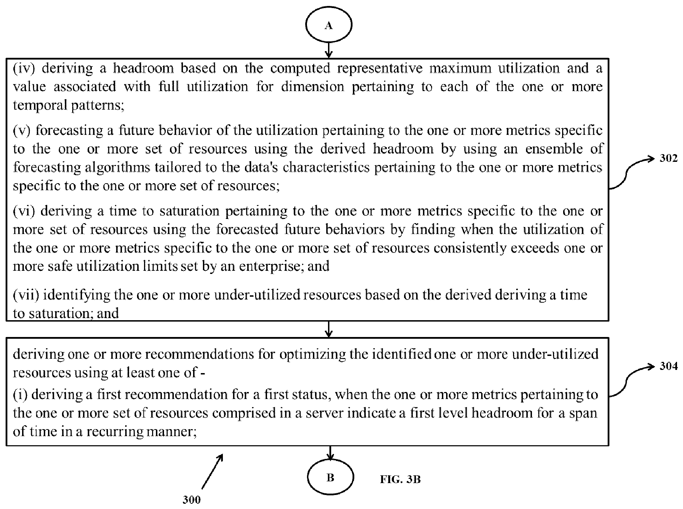

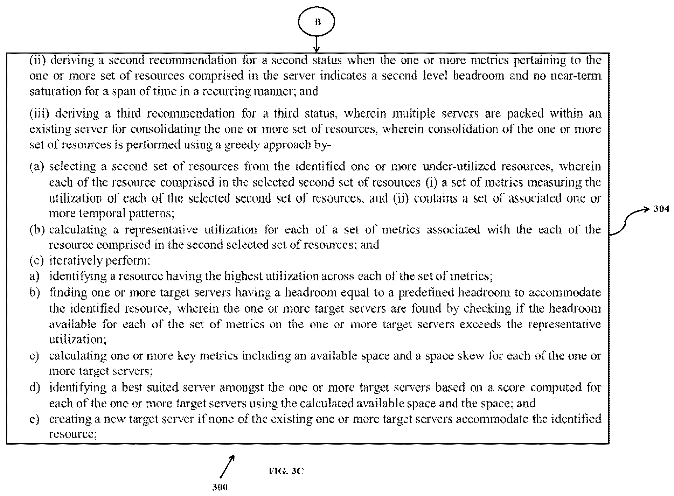

FIGS. 3A through 3C are flow diagrams illustrating a method to optimize cloud cost by analyzing resource utilization using the systems 100 of FIGS. 1-2, according to some embodiments of the present disclosure. Steps of the method of FIGS. 3A through 3C shall be described in conjunction with the components of FIG. 2. At step 302 of the method 300, the under-utilized resources identification module 204 executed via the one or more hardware processors 102 identifies one or more under-utilized resources from one or more set of resources (represented by the resources module 202) specific to a cloud vendor. The under-utilized resources refer to (i) a first set of resources with consistently low utilization levels and (ii) the first set of resources that are not likely to saturate in near future. The one or more set of resources are instances of one or more cloud services created within one or more resource groups. The one or more under-utilized resources are identified using the following steps. A most recent steady state in utilization of the one or more metrics specific to the one or more set of resources is derived using an ensemble of change detection algorithms to detect significant and persistent changes in a mean, a variation, one or more temporal patterns (For example, Days of a week, Hours of a Day, Days of a Month) and a trend pertaining to the utilization of the one or more metrics specific to the one or more set of resources. The one or more metrics specific to the one or more set of resources comprise a Central Processing Unit and a memory.

The one or more temporal patterns are derived by analyzing the derived the most recent steady state in utilization of the one or more metrics specific to the one or more set of resources across one or more temporal dimensions to identify one or more recurring patterns of at least one of over utilization and under-utilization. A representative maximum utilization of the one or more metrics specific to the one or more set of resources is derived for each of the derived one or more temporal patterns using one or more techniques comprising at least one of a 90th quantiles, a maximum after removing outliers and a mean + standard deviation. A headroom is computed based on the computed representative maximum utilization and a value associated with full utilization for dimension pertaining to each of the one or more temporal patterns. Herein the headroom refers to the capacity of a server.

A future behavior of the utilization pertaining to the one or more metrics specific to the one or more set of resources is forecasted using the derived headroom by using an ensemble of forecasting algorithms tailored to one or more data characteristics pertaining to the one or more metrics specific to the one or more set of resources. The data characteristics comprises a data duration, a persistence, and at least one of univariant timeseries data or multivariant timeseries data and one or more gaps pertaining to the utilization of the timeseries data. A time to saturation pertaining to the one or more metrics specific to the one or more set of resources is derived using the forecasted future behaviors by finding when the utilization of the one or more metrics specific to the one or more set of resources consistently exceeds one or more safe utilization limits set by an enterprise. Finally, the one or more under-utilized resources are identified based on the derived deriving a time to saturation.

The one or more cloud resources are organized in a hierarchical structure. The hierarchy typically consists of multiple levels, each level serving a specific purpose in resource management. At the top level, there is usually an overarching entity, followed by intermediate levels that help in grouping and organizing resources effectively. Each level within the hierarchy plays a distinct role in resource allocation, billing, and management.

Management groups: Management groups enable centralized management of access, policy, and compliance across multiple cloud accounts. Conditions applied to a management group are inherited by all included accounts, ensuring consistent governance.

Subscriptions: Subscriptions associate user identities with the resources they create and impose limits on resource usage. The subscriptions help organizations or various entities manage costs and resource allocation by segmenting resources according to users, teams, and/or projects.

Resource groups: Resource groups are logical containers for deploying and managing cloud resources such as virtual machines and databases. The resource groups facilitate organized resource management, role-based access control, and policy enforcement.

Resources: Resources are instances of cloud services, such as virtual machines and storage accounts, created within resource groups. Effective resource management involves adhering to organizational policies and optimizing configurations for performance and cost.

At step 304 of the method 300, the cloud cost optimization recommendation module 206 executed via the one or more hardware processors 102 derives one or more recommendations for optimizing the identified one or more under-utilized resources using at least one of the following steps. A first recommendation for a first status is derived when the one or more metrics pertaining to the one or more set of resources comprised in a server indicate a first level headroom for a span of time in a recurring manner. Herein the first recommendation refers to an auto shutdown, when all metrics of the server show 100% headroom for a span of time in a recurring fashion. Further, the first level headroom represents the minimum utilization from the full utilization value of 100 for each of one or more temporal pattern dimensions.

For example: Central processing Unit (CPU) utilization of 0-1% is an example, where ~100% headroom is available. This situation is tackled by shutting down the resource.

A second recommendation for a second status is derived when the one or more metrics pertaining to the one or more set of resources comprised in the server indicates a second level headroom and no near-term saturation for a span of time in a recurring manner. Herein the second recommendation refers to a vertical scale-down which includes an auto scaling, a downsizing, an auto shutdown, when all metrics of a server show high headroom (and no near-term saturation) for a span of time in a recurring fashion. Further, the second level headroom represents an underutilized resource.

For example: Central processing Unit (CPU) utilization of 5-20% is an example, where ~80-90% headroom is available. This situation is tackled by downgrading the resource (auto scaling).

A third recommendation for a third status is derived, wherein multiple servers are packed within an existing server for consolidating the one or more set of resources. Herein, the objective is to pack the Virtual Machines (VMs) into smallest possible VMs such that in the target VMs both the CPU and the Memory utilization do not exceed 100% for any of the one or more temporal pattern dimensions. For example - Lets consider 3 VMs with 20% utilization on weekdays and 10% on weekends. So, using consolidation algorithm, 3 VMs are combined in a way, such that 1 VM is left with:

- 60% utilization on weekdays (20 + 20 + 20 for 3 VMs)
- 30% utilization on weekends (10 + 10 + 10 for 3 VMs)

Herein the third recommendation refers to a horizontal scale-down, when multiple servers can be packed within an existing server with the same specifications (For example, CPU, memory and the like) and constraints (For example, an enterprise may require using only specific cloud provider like Amazon Web Services (AWS) within United States (US) region for development/testing purpose). The horizontal scale-down includes recommendations such as shutting down a few resources, consolidating the resources, wherein the consolidation is performed using a Bin Packing approach. In the present disclosure, the consolidation of the one or more set of resources is performed using a greedy approach which includes the following steps. A second set of resources is selected from the identified one or more under-utilized resources Each of the resource comprised in the selected second set of resources includes a set of metrics measuring the utilization of each of the resource comprised in the selected second set of resources and contains a set of associated one or more temporal patterns. A representative utilization is calculated for each metric of a set of metrics associated with the each of the resources comprised in the second selected set of resources.

The following steps are iteratively performed until all of one or more target servers are packed. A resource having the highest utilization across each set of metrics is identified. The one or more target servers having a headroom equal to a predefined headroom are found/identified to accommodate the identified resource. In the present disclosure, the predefined threshold is set on the headroom, which cannot be exceeded.

For example, let's say there are two servers with 50% utilization each (50% headroom). If both the servers have to be combined, then there will be a 100% utilization or 0% headroom. But there is a threshold set, such that headroom cannot be less than 10, or utilization cannot exceed 90. Then these two servers will not combine.

Further, the one or more target servers are found by checking if the headroom available for each of the set of metrics on the one or more target servers exceeds the representative utilization.

For example: Representative utilization = 100 - predefined headroom, or the threshold set, such that the combined utilization of VMs cannot exceed this value.

One or more key metrics including an available space, and a space skew is calculated for each of the one or more target servers. The Space skew is the standard deviation of the headroom of all the combined Virtual Machines (VMs). For example, For example - Let's say there were 5 VMs, and after consolidating, 5 VMs were reduced to 3 VMs. So, the headroom of these 3 resultant VMs is computed (100 - utilization for all 3). As a next step, standard deviation of these 3 headroom values is taken, wherein small value depicts an even fit (good) and a high value depicts an uneven fit (bad).

A best suited server amongst the one or more target servers is identified based on a score computed for each of the one or more target servers using the calculated available space and the space. Along with space skew, there is also:

Available space - average of all headroom.

Low value of this tell - good fit (very little headroom left).

High value of this tell - bad fit (very large headroom left).

Finally, the score is sum of space skew and available space. The lower the value of score, the better the fit.

A new target server is created if none of the existing one or more target servers accommodate the identified resource.

Cloud eco-system offers several opportunities to optimize the under-utilized resources. The resources that are consistently less utilized can be scaled down to a more suitable configuration. The resources that are not used at all or less used during certain time intervals in a recurring fashion can be auto shutdown or auto scaled down respectively. However, a more common case is of resources that demonstrate different headroom across different metrics, e.g., Central Processing Unit (CPU) is more used than storage. Another common case is observed where these resources demonstrate different temporal behavior, e.g., CPU is heavily used on weekdays and not used at all during weekends, and disk is heavily used on weekends, and moderately used during weekdays. Resource consolidation offers an effective solution for such resources. Resource consolidation refers to the activity of merging multiple under-utilized resources into fewer adequately utilized resources. The problem of resource consolidation can be reduced to a multi-dimensional bin-packing problem.

Resource consolidation problem

Instance:

- Finite set R of resources
- Each $Rk \in R$ contains a finite set $M$ of metrics and a finite set of temporal regions $T$
- A utilization $U(Mn)$ for each temporal region $Ti \in T$ and each metric $Mn \in M$
- A set of positive integers of maximum metric utilization capacity $C1, ... Cj$
- A positive integer $k$.

Question: Is there a partition of $R$ into disjoint sets $S_1, S_2, ... , S_k$ such that for each set $S_i$, for each metric $Mi \in M$, for each temporal region $Ti \in T$, the sum of metric utilization is less than the respective maximum metric utilization capacity $Ci$. The above problem can be reduced to a bin-packing problem, where the items represent individual resources and bins represent the fewer resources to consolidate into. However, to address the complexities of consolidation, the bin-packing problem needs to be modified. Instead of traditional bin-packing, consider a bin with multiple dimensions. These dimensions represent multiple metrics of a resource as well as multiple temporal regions of utilization.

The multi-dimensional bin packing problem can be defined as follows: Multi-dimensional bin-packing problem

Instance: Finite set $I$ of items, where each $I_k \in I$ contains a finite set $J$ of items, a size $S(Jn)$ for each set $Ji \in J$, a set of positive integers of bin capacity $B_1, ... B_j$, and a positive integer $k$.

Question: Is there a partition of I into disjoint sets $S_1, S_2, ... , S_k$ such that for each subset $J_n \in S_i$, the sum of sizes of the items in each $J_n$ is $B_n$ or less?

Reduction The resource consolidation problem can be reduced to the multidimensional bin-packing problem as follows:

- The set of resources $R$ maps to the set of items $I$
- The set of metrics $M$ and temporal regions $T$ maps to the finite set of items $J$
- The utilization $U(Mn)$ for each metric and each temporal region maps to size $S(Jn)$
- The set $C$ of maximum metric utilization capacity maps to the set $B$ of maximum bin capacity

Consider a scenario of consolidating multiple virtual machines (VMs) into fewer virtual machines (VMs). Each VM has 2 metrics - CPU utilization, and memory utilization. Furthermore, each metric shows a weekday and weekend behavior pattern. In this case, each item is a VM, and each bin is a target state VM. Each item and each bin are associated with 4 dimensions - viz. CPU utilization, memory utilization, weekday, and weekend. The objective is to pack the VMs into smallest possible VMs such that in the target VMs both CPU and Memory utilization do not exceed 100% on either weekday or weekend.

Using this reduction, a Greedy approach is presented to solve the problem of resource consolidation.

1. Consider a set $R$ of resources, where each resource $R_i \in R$ consists of a set $M$ of $k$ metrics $M_1, ... , M_k$.

2. Compute representative utilization $U_{M_i}^{R_i}$ of each metric $M_i$ of each resource $R_i$

3. Select the resource $R_i$ that has the with highest value of $\sum U_{M_i}^{R_i}$ for each metric $M_i$ of resource $R_i$.

4. Of all the available target servers, select the subset of target servers $T'$ that have sufficient headroom to pack $R_i$ across all $k$ metrics, i.e. $T_i \in T$ if for each metric $M_i \in M$, $Headroom_{M_i}^{T_i} > U_{M_i}^{R_i}$.

5. If no target server is available to pack the resource $R_i$, then instantiate a new target server $T_i$

6. Of all the available target servers, select the most suitable target server to pack $R_i$ as follows. For each target server $T_i$, compute available space and space skew as follows:

   a. AvailableSpace($T_i$) = *Average* (*Headroom*($M_i$)) for each metric $M_i \in M$
   b. SpaceSkew($T_i$)= *StandardDeviation* (*Headroom*($M_i$)) for each metric $M_i \in M$
   c. Score ($T_i$) = AvailableSpace ($T_i$) + SpaceSkew ($T_i$)

7. Select the target server $T_i$ with the highest value of Score ($T_i$) to pack

8. Go to step 3, until all servers are packed

9. Return the set $T$.

The cost savings are computed by taking difference of current spend forecast and forecasted spend after packing the servers i.e., one or more cost savings are computed by each of the one or more recommendations and recommending the one or more cost savings with the most savings.

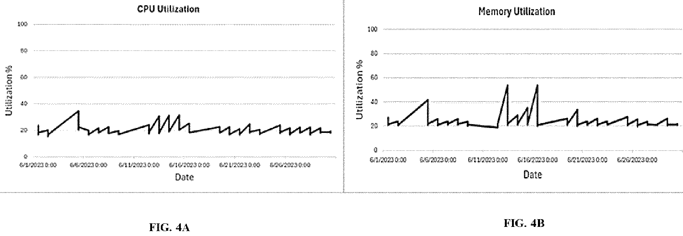

FIGS. 4A and 4B show a Central Processing Unit (CPU) and a memory utilization of an underutilized Virtual Machine (VM), according to some embodiments of the present disclosure. Scaling down and shutdowns: An example of one such resource, which is a 4 core, 16 GB VM, and incurs an annual cost of INR 40k. FIGS. 4A and 4B show that both CPU and memory utilizations were consistently below 40% and have a headroom of 80% for CPU and 78% for memory. This underutilization indicates an opportunity to downgrade to a more appropriate configuration. A suitable replacement is identified to 2 cores, and 8 GB model. The estimated annual cost of this configuration is INR 22k resulting in a potential annual saving of INR 18k. Similar to this, the proposed solution identified 174 resources that could either be auto scaled or shut down leading to a potential saving of INR 25,58,093.

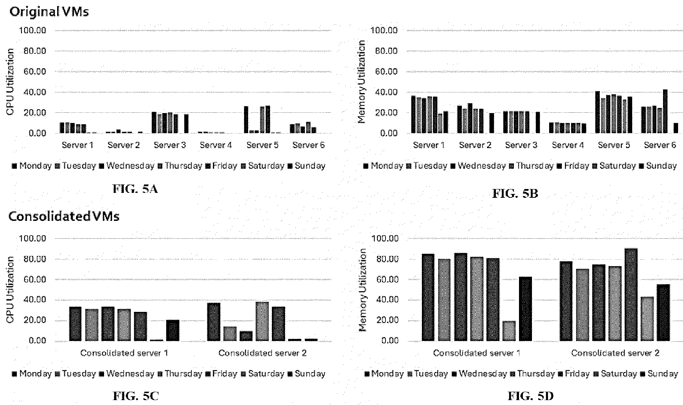

FIGS. 5A through 5D shows an example of resource consolidation, according to some embodiments of the present disclosure. The proposed solution is applied to analyze resource utilization and identify opportunities for rescaling, downsizing, and consolidation. Initially, headroom is computed and time-to-saturation of resources to identify under-utilized VMs. There were 642 VMs in the estate. It is observed that 221 resources are consistently under-utilized. It is observed that 27 resources observe temporal patterns of high and low utilization. Further, recommendations are generated to scale down resources or consolidate resources.

In the present disclosure, 52 sets of homogeneous resources were identified using the same specifications as described above. Within each set the system 100 identified candidates for resource consolidation. FIGS. 5A and 5B present one such example of 6 underutilized VMs belonging to the same application, same resource, and in the East US location. These VMs incurred a total cost of INR 2,68,000. By analyzing utilization patterns, it was found that both CPU and memory usage followed a weekly cycle, with higher utilization on weekdays compared to weekends. Using the consolidation algorithm (not shown in FIGS.) as implemented by the system 100, it was determined that these 6 VMs could be consolidated into just 2 VMs, maintaining optimal performance under 85% utilization on any given day. This is illustrated in FIGS. 5C and 5D, which show the final utilization of the two packed VMs across temporal dimensions. Implementing these recommendations could result into an annual savings of INR 1,70,000, which is 63.4% of the current total spend on these VMs.

Additionally, an opportunity to further reduce costs is identified by implementing autoscaling and shutdowns for the packed VMs on weekends, which could have annually saved an additional INR 18,000 leading to total savings to INR 188k. Applying a similar approach over the entire cloud estate, a potential annual savings of over INR 25,58,093 from just rescaling and shutdowns, and over INR 42,59,494 from consolidations was observed. Applying both in sequence, consolidations followed by rescaling of the resulting VMs could potentially save INR 53,38,824 over a one-year period. Additionally, the present method is compared with the commonly used approaches (conventional approaches), such as computing headroom by measuring 90th percentile of utilization and recommending closest downgrades. This basic method only results in annual savings of INR 9,92,907 compared to INR 53,38,824 by the method of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The under-utilized resources are attributed to various reasons such as over-provisioning of resources, diminishing use of resource, application upgrades. The present disclosure identifies one or more under-utilized resources from the one or more set of resources and derives recommendations for optimizing the identified one or more under-utilized resources.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (300), comprising:

identifying (302), via one or more hardware processors, one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified:

(i) deriving a most recent steady state in utilization of one or more metrics specific to the one or more set of resources using an ensemble of change detection algorithms;

(ii) deriving one or more temporal patterns by analyzing the derived most recent steady state in the utilization of the one or more metrics specific to the one or more set of resources across one or more temporal dimensions to identify one or more recurring patterns of at least one of an over utilization and a under-utilization;

(iii) computing a representative maximum utilization of the one or more metrics specific to the one or more set of resources for each of the derived one or more temporal patterns using one or more techniques comprising at least one of a 90th quantiles, a maximum after removing outliers and a mean + standard deviation;

(iv) deriving a headroom based on the computed representative maximum utilization and a value associated with full utilization for the one or more temporal dimensions pertaining to each of the derived one or more temporal patterns;

(v) forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources;

(vi) deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and

(vii) identifying the one or more under-utilized resources based on the derived time to saturation; and

deriving (304), via the one or more hardware processors, one or more recommendations for optimizing the identified one or more under-utilized resources using at least one of :

(i) deriving a first recommendation for a first status when the one or more metrics pertaining to the one or more set of resources comprised in a server indicate a first level headroom for a span of time in a recurring manner;

(ii) deriving a second recommendation for a second status when the one or more metrics pertaining to the one or more set of resources comprised in the server indicates a second level headroom and no near-term saturation for a span of time in a recurring manner; and

(iii) deriving a third recommendation for a third status, wherein multiple servers are packed within an existing server for consolidating the one or more set of resources, wherein consolidation of the one or more set of resources is performed using a greedy approach by:

a) selecting a second set of resources from the identified one or more under-utilized resources, wherein each of the selected second set of resources comprises (i) a set of metrics measuring the utilization of each of the selected second set of resources, and (ii) contains a set of associated one or more temporal patterns;

b) calculating a representative utilization for each of the set of metrics associated with each of the selected second set of resources; and

c) iteratively perform:

a) identifying a resource having the highest utilization across each of the set of metrics;

b) finding one or more target servers having a headroom equal to a predefined headroom to accommodate the identified resource, wherein the one or more target servers are found by checking if the headroom available for each of the set of metrics on the one or more target servers exceeds the representative utilization;

c) calculating one or more key metrics including an available space and a space skew for each of the one or more target servers;

d) identifying a best suited server amongst the one or more target servers based on a score computed for each of the one or more target servers using the calculated one or more key metrics; and

e) creating a new target server if none of the existing one or more target servers accommodate the identified resource.

2. The processor implemented method (300) as claimed in claim 1, wherein the one or more cloud services comprise one or more virtual machines and one or more storage accounts.

3. The processor implemented method (300) as claimed in claim 1, wherein the one or more resource groups are one or more logical containers for deploying and managing the one or more set of resources, and wherein the one or more resource groups facilitate an organized resource management, a role-based access control, and a policy enforcement.

4. The processor implemented method (300) as claimed in claim 1, wherein the one or more metrics specific to the one or more set of resources comprise a Central Processing Unit (CPU) and a memory.

5. The processor implemented method (300) as claimed in claim 1, wherein the headroom refers to a capacity of the server, wherein the available space refers to an average headroom available across the set of metrics associated with the each of the one or more resources comprised in the selected set of resources, and wherein the space skew measures a variability of the headroom across the set of metrics.

6. The processor implemented method (300) as claimed in claim 1, wherein the one or more data characteristics comprises a data duration, a persistence, and at least one of univariant timeseries data or multivariant timeseries data and one or more gaps pertaining to the utilization of the timeseries data.

7. The processor implemented method (300) as claimed in claim 1, wherein one or more cost savings are computed by each of the one or more recommendations and recommending the one or more cost savings with the most savings.

8. A system (100), comprising:

a memory (104) storing instructions;
one or more communication interfaces (112); and
one or more hardware processors (102) coupled to the memory (104) via the one or more communication interfaces (112), wherein the one or more hardware processors (102) are configured by the instructions to:

identify one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified:

(i) deriving a most recent steady state in utilization of one or more metrics specific to the one or more set of resources using an ensemble of change detection algorithms;
(ii) deriving one or more temporal patterns by analyzing the derived most recent steady state in the utilization of the one or more metrics specific to the one or more set of resources across one or more temporal dimensions to identify one or more recurring patterns of at least one of an over utilization and a under-utilization;
(iii) computing a representative maximum utilization of the one or more metrics specific to the one or more set of resources for each of the derived one or more temporal patterns using one or more techniques comprising at least one of a 90th quantiles, a maximum after removing outliers and a mean + standard deviation;
(iv) deriving a headroom based on the computed representative maximum utilization and a value associated with full utilization for the one or more temporal dimensions pertaining to each of the derived one or more temporal patterns;
(v) forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources;
(vi) deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and
(vii) identifying the one or more under-utilized resources based on the derived time to saturation; and

derive one or more recommendations for optimizing the identified one or more under-utilized resources using at least one of -

(i) deriving a first recommendation for a first status when the one or more metrics pertaining to the one or more set of resources comprised in a server indicate a first level headroom for a span of time in a recurring manner;

(ii) deriving a second recommendation for a second status when the one or more metrics pertaining to the one or more set of resources comprised in the server indicates a second level headroom and no near-term saturation for a span of time in a recurring manner; and

(iii) deriving a third recommendation for a third status, wherein multiple servers are packed within an existing server for consolidating the one or more set of resources, wherein consolidation of the one or more set of resources is performed using a greedy approach by-

> a) selecting a second set of resources from the identified one or more under-utilized resources, wherein each of the selected second set of resources comprises (i) a set of metrics measuring the utilization of each of the selected second set of resources, and (ii) contains a set of associated one or more temporal patterns;
> b) calculating a representative utilization for each of the set of metrics associated with each of the selected second set of resources; and
> c) iteratively perform:

>> a) identifying a resource having the highest utilization across each of the set of metrics;
>> b) finding one or more target servers having a headroom equal to a predefined headroom to accommodate the identified resource, wherein the one or more target servers are found by checking if the headroom available for each of the set of metrics on the one or more target servers exceeds the representative utilization;
>> c) calculating one or more key metrics including an available space and a space skew for each of the one or more target servers;
>> d) identifying a best suited server amongst the one or more target servers based on a score computed for each of the one or more target servers using the calculated one or more key metrics; and
>> e) creating a new target server if none of the existing one or more target servers accommodate the identified resource.

9. The system (100) as claimed in claim 10, wherein the one or more cloud services comprises one or more virtual machines and one or more storage accounts.

10. The system (100) as claimed in claim 10, wherein the one or more resource groups are one or more logical containers for deploying and managing the one or more set of resources, and wherein the one or more resource groups facilitate an organized resource management, a role-based access control, and a policy enforcement.

11. The system (100) as claimed in claim 10, wherein the one or more metrics specific to the one or more set of resources comprises a Central Processing Unit and a memory.

12. The system (100) as claimed in claim 10, wherein the headroom refers to a capacity of the server, wherein the available space refers to an average headroom available across the set of metrics associated with the each of the one or more resources comprised in the selected set of resources, and wherein the space skew measures a variability of the headroom across the set of metrics.

13. The system (100) as claimed in claim 10, wherein the data characteristics comprises a data duration, a persistence, and at least one of univariant timeseries data or multivariant timeseries data and one or more gaps pertaining to the utilization of the timeseries data.

14. The system as claimed in claim 10, wherein, one or more cost savings are computed by each of the one or more recommendations and recommending the one or more cost savings with the most savings.

15. One or more non-transitory machine-readable information storage mediums comprising one or more instructions which when executed by one or more hardware processors cause:

identifying one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified:

(i) deriving a most recent steady state in utilization of one or more metrics specific to the one or more set of resources using an ensemble of change detection algorithms;
(ii) deriving one or more temporal patterns by analyzing the derived most recent steady state in the utilization of the one or more metrics specific to the one or more set of resources across one or more temporal dimensions to identify one or more recurring patterns of at least one of an over utilization and a under-utilization;
(iii) computing a representative maximum utilization of the one or more metrics specific to the one or more set of resources for each of the derived one or more temporal patterns using one or more techniques comprising at least one of a 90th quantiles, a maximum after removing outliers and a mean + standard deviation;
(iv) deriving a headroom based on the computed representative maximum utilization and a value associated with full utilization for the one or more temporal dimensions pertaining to each of the derived one or more temporal patterns;
(v) forecasting a future behavior of the utilization pertaining to the one or more metrics specific to the one or more set of resources using the derived headroom by using an ensemble of forecasting algorithms tailored to one or more data characteristics pertaining to the one or more metrics specific to the one or more set of resources;
(vi) deriving a time to saturation pertaining to the one or more metrics specific to the one or more set of resources using the forecasted future behavior by finding when the utilization of the one or more metrics specific to the one or more set of resources consistently exceeds one or more safe utilization limits set by an enterprise; and
(vii) identifying the one or more under-utilized resources based on the derived time to saturation; and

deriving one or more recommendations for optimizing the identified one or more under-utilized resources using at least one of :

(i) deriving a first recommendation for a first status when the one or more metrics pertaining to the one or more set of resources comprised in a server indicate a first level headroom for a span of time in a recurring manner;
(ii) deriving a second recommendation for a second status when the one or more metrics pertaining to the one or more set of resources comprised in the server indicates a second level headroom and no near-term saturation for a span of time in a recurring manner; and
(iii) deriving a third recommendation for a third status, wherein multiple servers are packed within an existing server for consolidating the one or more set of resources, wherein consolidation of the one or more set of resources is performed using a greedy approach by:

a) selecting a second set of resources from the identified one or more under-utilized resources, wherein each of the selected second set of resources comprises (i) a set of metrics measuring the utilization of each of the selected second set of resources, and (ii) contains a set of associated one or more temporal patterns;
b) calculating a representative utilization for each of the set of metrics associated with each of the selected second set of resources; and
c) iteratively perform:

a) identifying a resource having the highest utilization across each of the set of metrics;
b) finding one or more target servers having a headroom equal to a predefined headroom to accommodate the identified resource, wherein the one or more target servers are found by checking if the headroom available for each of the set of metrics on the one or more target servers exceeds the representative utilization;
c) calculating one or more key metrics including an available space and a space skew for each of the one or more target servers;
d) identifying a best suited server amongst the one or more target servers based on a score computed for each of the one or more target servers using the calculated one or more key metrics; and
e) creating a new target server if none of the existing one or more target servers accommodate the identified resource.

MEMORY 104

MODULES 106

REPOSITORY 110

108

I/O INTERFACE 112

HARDWARE PROCESSORS 102

100

FIG. 1

RESOURCES MODULE 202 → UNDER-UTILIZED RESOURCES IDENTIFICATION MODULE 204 → CLOUD COST OPTIMIZATION RECOMMENDATION MODULE 206

FIG. 2

identifying one or more under-utilized resources from one or more set of resources specific to a cloud vendor, wherein the one or more under-utilized resources refers to (i) a first set of resources with consistently low utilization levels and (ii) the first set of resources that are not likely to saturate in near future, wherein the one or more set of resources are instances of one or more cloud services created within one or more resource groups, and wherein the one or more under-utilized resources are identified:

(i) deriving a most recent steady state in utilization of one or more metrics specific to the one or more set of resources using an ensemble of change detection algorithms;

(ii) deriving the one or more temporal patterns by analyzing the derived the most recent steady state in utilization of the one or more metrics specific to the one or more set of resources across one or more temporal dimensions to identify one or more recurring patterns of at least one of over utilization and under-utilization;

(iii)computing a representative maximum utilization of the one or more metrics specific to the one or more set of resources for each of the derived one or more temporal patterns using one or more techniques comprising at least one of a 90th quantiles, a maximum after removing outliers and a mean + standard deviation;

302

300

A

FIG. 3A

(A)

(iv) deriving a headroom based on the computed representative maximum utilization and a value associated with full utilization for dimension pertaining to each of the one or more temporal patterns;

(v) forecasting a future behavior of the utilization pertaining to the one or more metrics specific to the one or more set of resources using the derived headroom by using an ensemble of forecasting algorithms tailored to the data's characteristics pertaining to the one or more metrics specific to the one or more set of resources;

(vi) deriving a time to saturation pertaining to the one or more metrics specific to the one or more set of resources using the forecasted future behaviors by finding when the utilization of the one or more metrics specific to the one or more set of resources consistently exceeds one or more safe utilization limits set by an enterprise; and

(vii) identifying the one or more under-utilized resources based on the derived deriving a time to saturation; and

→ 302

deriving one or more recommendations for optimizing the identified one or more under-utilized resources using at least one of -

(i) deriving a first recommendation for a first status, when the one or more metrics pertaining to the one or more set of resources comprised in a server indicate a first level headroom for a span of time in a recurring manner;

→ 304

(B)    FIG. 3B

300

B

(ii) deriving a second recommendation for a second status when the one or more metrics pertaining to the one or more set of resources comprised in the server indicates a second level headroom and no near-term saturation for a span of time in a recurring manner; and

(iii) deriving a third recommendation for a third status, wherein multiple servers are packed within an existing server for consolidating the one or more set of resources, wherein consolidation of the one or more set of resources is performed using a greedy approach by-

(a) selecting a second set of resources from the identified one or more under-utilized resources, wherein each of the resource comprised in the selected second set of resources (i) a set of metrics measuring the utilization of each of the selected second set of resources, and (ii) contains a set of associated one or more temporal patterns;
(b) calculating a representative utilization for each of a set of metrics associated with the each of the resource comprised in the second selected set of resources; and
(c) iteratively perform:
a) identifying a resource having the highest utilization across each of the set of metrics;
b) finding one or more target servers having a headroom equal to a predefined headroom to accommodate the identified resource, wherein the one or more target servers are found by checking if the headroom available for each of the set of metrics on the one or more target servers exceeds the representative utilization;
c) calculating one or more key metrics including an available space and a space skew for each of the one or more target servers;
d) identifying a best suited server amongst the one or more target servers based on a score computed for each of the one or more target servers using the calculated available space and the space; and
e) creating a new target server if none of the existing one or more target servers accommodate the identified resource;

304

FIG. 3C

300

**FIG. 4A**

**FIG. 4B**

## Original VMs

FIG. 5A

FIG. 5B

## Consolidated VMs

FIG. 5C

FIG. 5D

**EUROPEAN SEARCH REPORT**

Europäisches
Patentamt
European
Patent Office
Office européen
des brevets

**Application Number**

EP 25 18 4602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | BHOOKYA UDAY CHANDRA ET AL: "Addressing Spend Leakage and Optimization of Cloud Costs", 2024 IEEE INTERNATIONAL CONFERENCE ON BIG DATA (BIGDATA), IEEE, 15 December 2024 (2024-12-15), pages 2288-2293, XP034801330, DOI: 10.1109/BIGDATA62323.2024.10825120 [retrieved on 2025-01-16] * the whole document * | 1-15 | INV. G06F9/50 G06Q10/04 H04L47/83 G06F11/30 G06F11/34 |
| A | US 2016/269239 A1 (ASHBY JR JOHN WILEY [US] ET AL) 15 September 2016 (2016-09-15) * figure 2 * * paragraph [0039] - paragraph [0055] * * paragraph [0071] - paragraph [0077] * | 1-15 | |
| A | CN 111 737 014 A (FUTONG YUNTENG TECH CO LTD) 2 October 2020 (2020-10-02) * the whole document * | 1-15 | |
| A | OSYPANKA PATRYK ET AL: "Resource Usage Cost Optimization in Cloud Computing Using Machine Learning", IEEE TRANSACTIONS ON CLOUD COMPUTING, vol. 10, no. 3, 1 July 2022 (2022-07-01), pages 2079-2089, XP093340249, ISSN: 2372-0018, DOI: 10.1109/TCC.2020.3015769 * abstract * * page 2081, right-hand column - page 2082, right-hand column * * figures 2,3 * | 1-15 | TECHNICAL FIELDS SEARCHED (IPC)  G06F G06Q H04L |
| A | WO 2024/151480 A1 (ORACLE INT CORP [US]) 18 July 2024 (2024-07-18) * figures 2,3 * | 1-15 | |

The present search report has been drawn up for all claims

| Place of search | Date of completion of the search | Examiner |
|---|---|---|
| The Hague | 27 November 2025 | Suzic, Bojan |

EPO FORM 1503 03.82 (P4C01)

2

## ANNEX TO THE EUROPEAN SEARCH REPORT
## ON EUROPEAN PATENT APPLICATION NO.

EP 25 18 4602

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2025

| Patent document cited in search report | | Publication date | Patent family member(s) | | Publication date |
|---|---|---|---|---|---|
| US 2016269239 | A1 | 15-09-2016 | NONE | | |
| CN 111737014 | A | 02-10-2020 | NONE | | |
| WO 2024151480 | A1 | 18-07-2024 | CN | 120513444 A | 19-08-2025 |
| | | | EP | 4649398 A1 | 19-11-2025 |
| | | | WO | 2024151480 A1 | 18-07-2024 |

EPO FORM P0459

For more details about this annex : see Official Journal of the European Patent Office, No. 12/82

## REFERENCES CITED IN THE DESCRIPTION

### Patent documents cited in the description

- IN 202421066668